# EUROPÄISCHE PATENTANMELDUNG

(11) **EP 3 187 257 A1**
(43) Veröffentlichungstag der Anmeldung: **05.07.2017**
(21) Anmeldenummer: 15203002.9
(22) Anmeldetag: 29.12.2015
(51) Int. Cl.: B01J 19/08, B01J 19/24, B01J 19/00

(54) **KAVITATIONSREAKTOREINRICHTUNG ZUM BEHANDELN VON FLIESSFÄHIGEN SUBSTANZEN**

(71) Anmelder: AVARUS Suisse Holding AG, 6052 Hergiswil NW (CH)
(72) Erfinder: Schüler, Rolf, 85258 Weichs (DE)
(74) Vertreter: Puschmann Borchert Bardehle Patentanwälte Partnerschaft mbB

(57) **Zusammenfassung**

Eine Kavitationsreaktoreinrichtung zum Behandeln von fließfähigen Substanzen, wobei dem Kavitationsreaktor wenigstens zwei Komponenten zugeführt, gemischt und/oder zur Reaktion gebracht werden, wobei der Kavitationsreaktoreinrichtung umfasst einen ersten Kavitationsreaktor mit einem ersten, rohrförmigen Gehäuse (2), mit dem in Strömungsrichtung (H) stromab eine Zulaufeinrichtung (4) verbunden ist, die eine zugeführte Haupt-Komponente als mittig in dem Gehäuse (2) verlaufenden Strahl in Strömungsrichtung (H) abgibt, und in dem ein der Zulaufeinrichtung (4) mittig gegenüberliegender Düsenkopf (6) angeordnet sind, der mehrere Kanäle aufweist, deren Mündungen unter unterschiedlichen radialen Abständen zu einer Mittelachse des Düsenkopfes (6) liegen und durch die wenigstens eine Zugabe-Komponente entgegen der Strömungsrichtung (H) der Haupt-Komponente zuzuführen ist, wobei durch die Beabstandung der Zulaufeinrichtung (4) von dem Düsenkopf (6) ein Reaktionsraum (14) in dem Gehäuse (2) gebildet ist, und einen zweiten Kavitationsreaktor mit einem zweiten, rohrförmigen Gehäuse (52), in dem ein schwer umströmbaren Reaktormodul (56) unter Bildung eines Ringraumes (58) zwischen dem Reaktormodul (56) und dem Gehäuse (52) über eine Halterung angeordnet ist, wobei der Reaktormodul (56) mehrere schwer umströmbare Scheibenelemente (64), die jeweils eine lokale Strömungseinengung bilden und von einender beabstandet sind, und Zwischenscheiben (66) zwischen den Scheibenelementen (64) aufweist.

## Beschreibung

Die Erfindung betrifft eine Kavitationsreaktoreinrichtung zum Behandeln von fließfähigen Substanzen, wobei dem Kavitationsreaktor wenigstens zwei Reaktionskomponenten zugeführt, gemischt und zur Reaktion gebracht werden.

DE 20 2010 000 075 U1 zeigt eine Vorrichtung zur Behandlung von fließfähigen Substanzen, wobei dem Kavitationsreaktor wenigstens zwei Reaktionskomponenten zugeführt, mittels turbulenter Strömungen bzw. Kavitation gemischt und zur Reaktion gebracht werden. Die Vorrichtung hat ein Gehäuse, in dem in Strömungsrichtung eine Zulaufdüse, die die zugeführte Haupt-Komponente als mittig in dem Gehäuse verlaufenden Strahl in Strömungsrichtung abgibt, und ein der Zulaufdüse mittig gegenüberliegender Düsenkopf angeordnet sind, der Kanäle zur Abgabe einer Zugabe-Komponente entgegen der Strömungsrichtung der Haupt-Komponente aufweist, wobei durch Beabstandung der Zulaufdüse von dem Düsenkopf ein Reaktionsraum in dem Gehäuse gebildet ist. Das Gehäuse ist als Rohr ausgebildet, das im Bereich des Düsenkopfes eine Verengung aufweist und in dem die Zulaufdüse, die eine sich in Strömungsrichtung verengende, vorzugsweise konische, Wand aufweist, angeordnet ist. Der Düsenkopf hat mehrere Kanäle, deren Mündungen unter unterschiedlichen radialen Abständen zu einer Mittelachse des Düsenkopfes liegen, und auf der dem Reaktionsraum zugewandten Seite der Zulaufdüse in Abstand dazu eine mit seitlichen Öffnungen versehene, vorzugsweise ebenfalls konische, Trennwand mit einer Austrittsöffnung vor der Düsenöffnung der Zulaufdüse angeordnet ist, wobei die Austrittsöffnung der Trennwand größer ist als die Düsenöffnung der Zulaufdüse.

Hydrodynamische Durchflussreaktoren, die auf der Basis von Kavitation arbeiten, sind auch aus der DE 103 10 442 A1 bekannt, die durch eine entsprechende Anordnung von schwer umströmbaren Körper als Superkavitationsreaktoren ausgebildet werden können. Hierbei handelt es sich meist um statische Bauteile, die durch Versuche für die jeweiligen festen, flüssigen und/oder gasförmigen Strömungs-Komponenten optimiert werden müssen. Eine Regulierungsfunktion wird dann durch Variation des Vordrucks bzw. Verschiebung der Turbulenz erzeugenden Elemente erreicht. Bei diesen hydrodynamischen Reaktoren nach dem Stand der Technik ist daher die Auslegung und die Handhabung umständlich, und den Gegebenheiten diverser Anwendungen kann nur begrenzt Rechnung getragen werden.

Der Erfindung liegt die Aufgabe zu Grunde, einen Kavitationsreaktor zum Behandeln von stark verunreinigten, fließfähigen Substanzen, dem wenigstens zwei Reaktionskomponenten zugeführt, gemischt und zur Reaktion gebracht werden, in Bezug auf Effizienz und Einfachheit der Auslegung zu verbessern.

Dazu dient die erfindungsgemäße Kavitationsreaktoreinrichtung zum Behandeln von fließfähigen Substanzen, wobei dem Kavitationsreaktor wenigstens zwei Komponenten zugeführt, gemischt und/oder zur Reaktion gebracht werden, wobei der Kavitationsreaktoreinrichtung umfasst einen ersten Kavitationsreaktor mit einem ersten, rohrförmigen Gehäuse, mit dem in Strömungsrichtung stromab eine Zulaufeinrichtung verbunden ist, die eine zugeführte Haupt-Komponente als mittig in dem Gehäuse verlaufenden Strahl in Strömungsrichtung abgibt, und in dem ein der Zulaufeinrichtung mittig gegenüberliegender Düsenkopf angeordnet sind, der mehrere Kanäle aufweist, deren Mündungen unter unterschiedlichen radialen Abständen zu einer Mittelachse des Düsenkopfes liegen und durch die wenigstens eine Zugabe-Komponente entgegen der Strömungsrichtung der Haupt-Komponente zuzuführen ist, wobei durch die Beabstandung der Zulaufeinrichtung von dem Düsenkopf ein Reaktionsraum in dem Gehäuse gebildet ist, und einen zweiten Kavitationsreaktor mit einem zweiten, rohrförmigen Gehäuse, in dem ein schwer umströmbarer Reaktormodul unter Bildung eines Ringraumes zwischen dem Reaktormodul und dem Gehäuse über eine Halterung angeordnet ist, wobei der Reaktormodul mehrere schwer umströmbare Scheibenelemente, die jeweils eine lokale Strömungseinengung bilden und von einender beabstandet sind, und Zwischenscheiben zwischen den Scheibenelementen aufweist.

Durch den ersten Kavitationsreaktor der erfindungsgemäßen Kavitätsreaktoreinrichtung wird ein Gegenstromsystem verwirklicht, in dem die von der Zulaufeinrichtung abgegebene Strömung auf den Düsenkopf auftrifft und sodann entgegen der Hauptströmungsrichtung, d. h. in Richtung auf die Zulaufeinrichtung, zurückgeworfen wird, wobei die Komponente, die durch die Kanäle in dem Düsenkopf in das System eingeführt wird, der Strömung eine zusätzliche Kraftkomponente in Richtung auf die Zulaufeinrichtung erteilt. Da die Mündungen der Kanäle unterschiedliche radiale Abstände von der Mittelachse des Düsenkopfes haben, wirkt die durch das aus den Kanälen austretende Strömungsmittel erteilte Kraftkomponente großflächig, und es findet eine innige Vermischung der beiden Komponenten in dem Reaktionsraum statt, was die Behandlung der einen Komponente, beispielsweise Rohöl, durch die andere Komponente, beispielsweise Methan, erst ermöglicht oder zumindest erheblich beschleunigt. Dabei kann das Rohöl sowohl von Verunreinigungen befreit als auch aufbereitet werden durch Umsetzung des Gases in zusätzlichen Treibstoff, wobei die Aufbereitung durch Kavitation den bisherigen Verfahren zur Aufbereitung von Rohöl weit überlegen ist. Die Effizienz der Vorrichtung wird insbesondere durch die hohe Turbulenz in den Strömungen und damit durch Kavitation in einer solchen Weise erhöht, dass auch die Auslegung der Einrichtung vereinfacht wird, indem die Vorrichtungen in einer einzigen Ausgestaltung für eine Reihe von Anwendungsfällen geeignet ist. Ferner ist es vorteilhaft, dass, da die Scheibenelemente und die Zwischenscheiben separat voneinander ausgebildet sind, der Kavitationsreaktor auf unterschiedliche Substanzen eingestellt werden kann, indem die Scheibenelemente und die Zwischenscheiben je nach Bedarf ausgetauscht werden, um das Maß der Überdeckung der Scheibenelemente durch die Zwischenscheiben variiert wird.

Bei der erfindungsgemäßen Kavitationsreaktorseinrichtung ist außerdem vorteilhaft, dass in dem ersten Kavitationsreaktor eine sehr intensive Behandlung der Substanz stattfindet, während in dem nachgeschalteten, zweiten Kavitationsreaktor eine schonende Nachbehandlung stattfindet, sodass die Durchmischung der Komponenten der Substanz optimiert und eventuell ablaufende Reaktionen zwischen Reaktionskomponenten der Substanz weitgehend abgeschlossen werden können.

Eine vorteilhafte Ausgestaltung der erfindungsgemäßen Kavitationsreaktorseinrichtung ist dadurch gekennzeichnet, dass die Zulaufeinrichtung ein Zulaufgehäuse mit einem mittigen Zulaufkanal aufweist, der sich von einer eintrittsseitigen Zulauföffnung aus mit einem in Strömungsrichtung trichterförmig ausgebildeten Erweiterungsabschnitt bis zu dem rohrförmigen Gehäuse erstreckt. Mit dem trichterförmigen Erweiterungsabschnitt des Zulaufkanals findet in vorteilhafter Weise bereits eine Behandlung der Substanz als Vorbereitung zu der intensiveren Behandlung in dem Reaktionsraum statt, sodass der Raum zwischen der Zulaufeinrichtung und dem Düsenkopf optimal für die Behandlung der Substanz genutzt werden kann.

Eine weitere vorteilhafte Ausgestaltung der erfindungsgemäßen Kavitationsreaktorseinrichtung ist dadurch gekennzeichnet, dass der Zulaufkanal eintrittsseitig einen zylindrischen Kanalabschnitt aufweist, an den sich in Strömungsrichtung der Erweiterungsabschnitt anschließt, wobei die Zulaufeinrichtung eine mittig in das Gehäuse gerichtete Strömung der Haupt-Komponente abgibt. Durch den zylindrischen Kanalabschnitt wird die aus dem Kanalabschnitt austretende Hauptkomponente zu einem mittigen Strahl geformt, der in dem Erweiterungsabschnitt der Zulaufeinrichtung radialgerichtete Bewegungskomponenten erhält und damit bereits für eine Verkörperung der Haupt-Komponenten sorgt, sodass der Ablauf der Kavität bereits beim Eintritt in den Reaktionsraum begünstigt wird.

Eine weitere vorteilhafte Ausgestaltung der erfindungsgemäßen Kavitationsreaktorseinrichtung ist dadurch gekennzeichnet, dass das Zulaufgehäuse mehrere parallel zur Strömungsrichtung verlaufende Hilfs-Zulaufkanäle aufweist, die eintrittsseitig unter radialen Abständen zu dem Zulaufkanal liegen und in dem konischen Erweiterungsabschnitt enden. In Versuchen hat sich gezeigt, dass die Hilfs-Zulaufkanäle zu einer noch stärkeren Verwirbelung und Vermischung der Reaktions-Komponenten in dem Reaktionsraum führt, indem dort Wirbelströme entstehen. Andererseits kann beim Einsatz der Hilfs-Zulaufkanäle der zum Betreiben der Vorrichtung erforderliche Druck deutlich herabgesetzt werden. Während eine Vorrichtung ohne die Hilfs-Zulaufkanäle beispielsweise 8 bar benötigt, kommt die Vorrichtung mit den Hilfs-Zulaufkanälen mit 0,8 bar aus, was für das Betreiben der Vorrichtung außerordentlich vorteilhaft ist.

Eine weitere vorteilhafte Ausgestaltung der erfindungsgemäßen Kavitationsreaktorseinrichtung ist dadurch gekennzeichnet, dass in der Mitte des Düsenkopfes eine Prallfläche ohne Kanäle für den von der Zulaufeinrichtung abgegebenen Strahl vorgesehen ist. Indem der aus der Zulaufeinrichtung austretende Strahl nicht auf einen Kanal in dem Düsenkopf, sondern auf die Prallfläche auftrifft, wird die Strömungsumkehr des aus der Zulaufeinrichtung austretenden Strahles mit Sicherheit erreicht. Außerdem trifft das Strömungsmittel, das aus den Kanälen des Düsenkopfes austritt, in einem Bereich seitlich von dem von der Zulaufeinrichtung abgegebenen Hauptstrahl auf die rückläufige Strömung auf, was die Strömungskinetik in dem Reaktionsraum verbessert.

Eine weitere vorteilhafte Ausgestaltung der erfindungsgemäßen Kavitationsreaktorseinrichtung ist dadurch gekennzeichnet, dass die Kanäle des Düsenkopfes außerhalb der Prallfläche auf Kreisen mit unterschiedlichen Radien zu der Mittelachse des Düsenkopfes angeordnet sind. Dadurch wird eine gleichmäßige flächige Verteilung der Mündungen der Kanäle in dem Düsenkopf erreicht, was eine ebenso vorteilhafte flächige Verteilung der aus den Kanälen austretenden Strömungsmittel bewirkt.

Eine weitere vorteilhafte Ausgestaltung der erfindungsgemäßen Kavitationsreaktorseinrichtung ist dadurch gekennzeichnet, dass die Mündungen der Kanäle auf einer Einhüllendenfläche liegen, die sich von der Prallfläche in Richtung zu der Zulaufeinrichtung hin erweiternd zu einem äußeren Rand des Düsenkopfes erstreckt, wobei die Einhüllendenfläche vorzugsweise eine becherförmige, weiter bevorzugt eine konische Fläche ist. Bei dieser Anordnung wird nicht nur eine großflächige, sondern auch eine räumliche Verteilung der Mündungen der Kanäle in dem Düsenkopf erreicht, was zu einer weiteren Verbesserung der Durchmischung der aus den Kanälen austretenden Strömungen mit der von der Zulaufeinrichtung kommenden Strömung führt.

Eine weitere vorteilhafte Ausgestaltung der erfindungsgemäßen Kavitationsreaktorseinrichtung ist dadurch gekennzeichnet, dass der Düsenkopf auf einer Halterung gelagert ist, die eine mittige Durchtrittsöffnung für die Einleitung der Zugabe-Komponente in den Düsenkopf aufweist, wobei die Durchtrittsöffnung über Verbindungskanäle mit jeweils einer Einlassöffnung zur Zufuhr jeweils einer Zugabe-Komponente in die Verbindungskanäle verbunden ist. Im Falle von mehreren Zugabe-Komponenten werden in vorteilhafter Weise diese bereits in den Verbindungskanälen vor gemischt und dann gemeinsam durch den Düsenkopf in den Reaktionsraum zugeführt.

Eine weitere vorteilhafte Ausgestaltung der erfindungsgemäßen Kavitationsreaktorseinrichtung ist dadurch gekennzeichnet, dass die Scheibenelemente jeweils mehrere radial verlaufende, durch das jeweilige Scheibenelement hindurch gehende Schlitze aufweist, und dass die Zwischenscheiben die Schlitze der Scheibenelemente wenigstens teilweise überdecken. Durch das Maß der Überdeckung der Schlitze durch die Zwischenscheiben wird in vorteilhafter Weise, wie Experimente nachgewiesen haben, das Ausmaß der Zerkleinerung von in der Substanz enthaltenen Festteilchen oder Zusammenballungen beeinflusst in dem Sinne, dass mit zunehmender Überdeckung die Größe der erzeugten Festteilchen oder Zusammenballungen kleiner wird. So werden beispielsweise Farben-Pasten behandelt, die bekanntlich feste Teilchen als Pigment enthalten.

Eine weitere vorteilhafte Ausgestaltung der erfindungsgemäßen Kavitationsreaktorseinrichtung ist dadurch gekennzeichnet, dass das Scheibenelement eine Scheibe umfasst, die an ihrem Umfang eine unter einem Winkel zu der Scheibe stehende Umfangsfläche hat, die eine Spitze bildet, die im Einbauzustand auf der stromab liegenden Seite des Scheibenelementes zu liegen kommt. Diese Ausgestaltung des Scheibenelements mit der Spitze trägt in vorteilhafter Weise zu einer weiteren Erhöhung der Kavitation in der Umgebung deren Spitzen bei.

Eine weitere vorteilhafte Ausgestaltung der erfindungsgemäßen Kavitationsreaktorseinrichtung ist dadurch gekennzeichnet, dass die Scheibenelemente und die Zwischenscheiben an einem Bolzen gestapelt und befestigt sind, der über die Halterung mit dem Gehäuse verbunden ist. Dadurch wird in vorteilhafter Weise der vorstehend erwähnte Austausch der Zwischenscheiben einfach gestaltet.

Eine weitere vorteilhafte Ausgestaltung der erfindungsgemäßen Kavitationsreaktorseinrichtung ist dadurch gekennzeichnet, dass der Reaktormodul zwei Teilbereiche umfasst, wobei die Scheibenelemente des stromauf liegenden Teilbereichs weiter von dem Gehäuse beabstandet sind als in dem stromab liegenden und daneben angeordneten Teilbereich. Dadurch ergibt sich an dem stromauf liegenden Teilbereich ein Ringraum oder Durchflussraum mit einer größeren Querschnittsfläche als der Ringraum oder Durchflussraum an dem stromab liegenden Teilbereich, wobei in vorteilhafter Weise der Übergang an dem kleineren Ringraum ein Rückstau entsteht, indem ein Teil der Strömung der Substanz in der Hauptflussrichtung weitergeleitet und ein Teil der Strömung der Substanz im Rückstau entgegen der Hauptflussrichtung geleitet wird, wobei die Fließgeschwindigkeiten von der Querschnittsfläche der entsprechenden Regenräume zwischen den Teilbereichen und den gegenüberliegenden Wandbereichen beeinflusst werden. Dadurch wird eine zusätzliche Intensivierung der Kavitation in der Substanz erreicht.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

Es zeigen:
- Figur 1: einen schematischen Schnitt durch ein Ausführungsbeispiel des erfindungsgemäßen Kavitationsreaktors;
- Figur 2: eine Draufsicht auf einen Düsenkopf mit Blickrichtung entlang der Hauptströmungsrichtung;
- Figur 3: einen Schnitt durch den Düsenkopf von Figur 2 entlang der Linie A - A;
- Figur 4: eine Draufsicht auf eine Halterung für den Düsenkopf; und
- Figur 5:: einen Schnitt durch die Halterung für den Düsenkopf.
- Figur 6: eine Schnittdarstellung eines Ausführungsbeispiels des erfindungsgemäßen Kavitationsreaktors;
- Figur 7: eine Draufsicht auf ein in dem Reaktormodul von Figur 1 verwendetes Scheibenelement mit Blickrichtung von unten in Figur 1;
- Figur 8A: einen Schnitt durch das Scheibenelement nach Figur 2 entlang einer Schnittlinie A -A in Figur 2;
- Figur 8B: einen Schnitt durch das Scheibenelement nach Figur 2 entlang einer Schnittlinie B - B in Figur 2;
- Figur 9: einen Schnitt durch die Kombination aus dem ersten und dem zweiten Kavitationsreaktor.

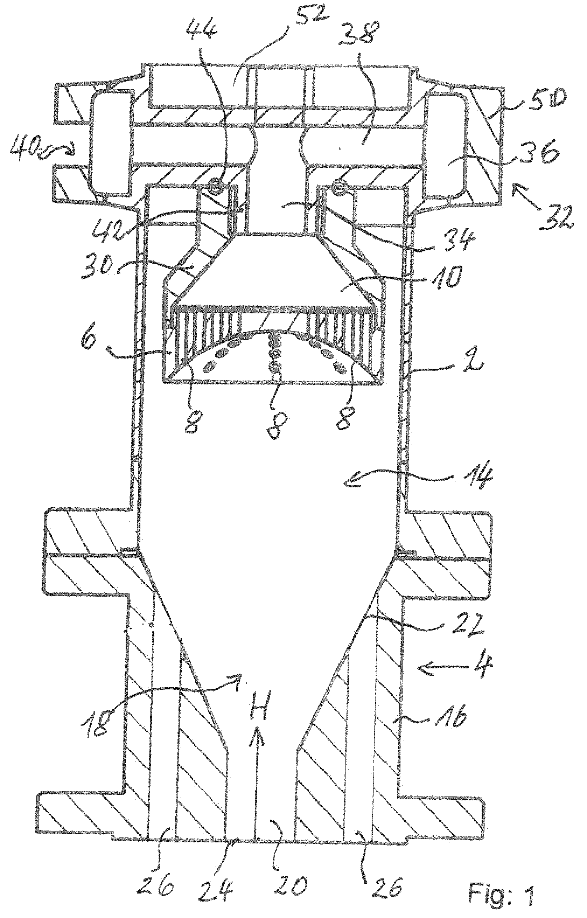

Gemäß Figur 1 zeigt einen ersten Kavitationsreaktor zum Behandeln von fließfähigen Substanzen, wobei dem Kavitationsreaktor wenigstens zwei Komponenten zugeführt, gemischt und/oder zur Reaktion gebracht werden sollen

Der erste Kavitationsreaktor umfasst ein rohrförmiges Gehäuse 2, das als zylindrisches Rohr ausgebildet ist und mit dem in Strömungsrichtung H stromab eine Zulaufeinrichtung 4 verbunden ist, die die zugeführte Haupt- Komponente abgibt. In dem Gehäuse 2 ist ein Düsenkopf angeordnet, der der Zulaufeinrichtung 4 mittig gegenüberliegt. Der Düsenkopf 6 hat mehrere Kanäle 8, deren Mündungen unter unterschiedlichen radialen Abständen zu einer Mittelachse des Düsenkopfes 6 liegen und zur Abgabe einer Zugabe-Komponente oder mehrerer Zugabe-Komponenten entgegen der Strömungsrichtung H der Haupt-Komponente einen Reaktionsraum 14 dienen, der durch die Beabstandung der Zulaufeinrichtung 4 von dem Düsenkopf 6 in dem Gehäuse 2 gebildet wird. Die Kanäle werden über eine Zufuhrkammer 10 gespeist.

Die Zulaufeinrichtung 4 hat in einem Zulaufgehäuse 16 einen mittigen Zulaufkanal 18, der eintrittsseitig einen zylindrischen Kanalabschnitt 20 und einen daran in Strömungsrichtung H anschließenden, im Querschnitt konischen Erweiterungsabschnitt 22 aufweist, der bis zu dem rohrförmigen Gehäuse 2 reicht. Die Haupt-Komponente wird durch eine Eintrittsmündung vierundzwanzig in den Kanalabschnitt zwanzig eingeleitet.

Das Zulaufgehäuse 16 hat mehrere, beispielsweise vier, parallel zur Strömungsrichtung H verlaufende Hilfs-Zufuhrkanäle 26, die eintrittsseitig unter radialen Abständen zu dem Kanalabschnitt 20 liegen und in dem konischen Erweiterungsabschnitt 22 enden.

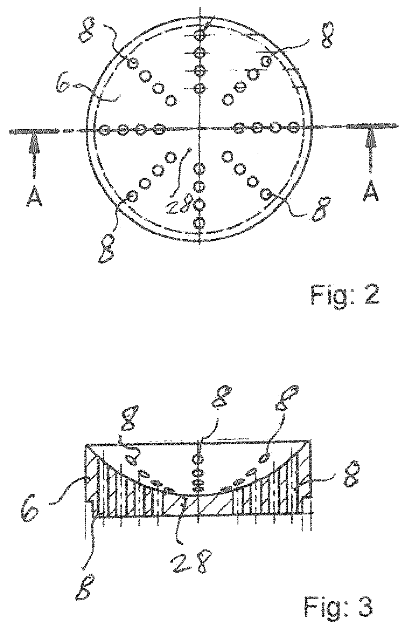

Wie aus den Figuren 2 und 3 zu ersehen ist, ist in der Mitte des Düsenkopfes 6 eine Prallfläche 28 ohne Kanäle für den von der Zulaufeinrichtung 4 abgegebenen Strahl vorgesehen. Die Kanäle 8 des Düsenkopfes 6 außerhalb der Prallfläche 28 sind auf Kreisen mit unterschiedlichen Radien zu der Mittelachse des Düsenkopfes 6 angeordnet. Ferner liegen die Mündungen der Kanäle 8 auf einer Einhüllendenfläche, die eine becherförmige, vorzugsweise konische Fläche ist und die sich von der Prallfläche 28 in Richtung zu der Zulaufeinrichtung 4 hin erweiternd zu einem äußeren Rand des Düsenkopfes 6 erstreckt.

Der Düsenkopf 6 ist austauschbar, indem der Düsenkopf 6 über einen Sockel 30 auf einer Halterung 32 gelagert ist, die eine mittige Durchtrittsöffnung 34 für die Einleitung der Zugabe-Komponente(n) in den Düsenkopf 6 aufweist, wobei die Durchtrittsöffnung 34 über Verbindungskanäle 36,38 mit einer Einlassöffnung 40 oder mehreren Eintrittsöffnungen im Fall von mehreren Zugabe-Komponenten zur Zufuhr der Zugabe-Komponente(n) nun an die Verbindungskanäle 36,38 verbunden ist. Wenn mehrere Zugabe-Komponenten eingesetzt werden, ist jeweils eine Einlassöffnung zur Zufuhr jeweils einer Zugabe-Komponente vorgesehen. Der Sockel 30 ist auf einen Bund 42 der Halterung 32 aufgesetzt und über eine Ringsdichtung 44 abgedichtet.

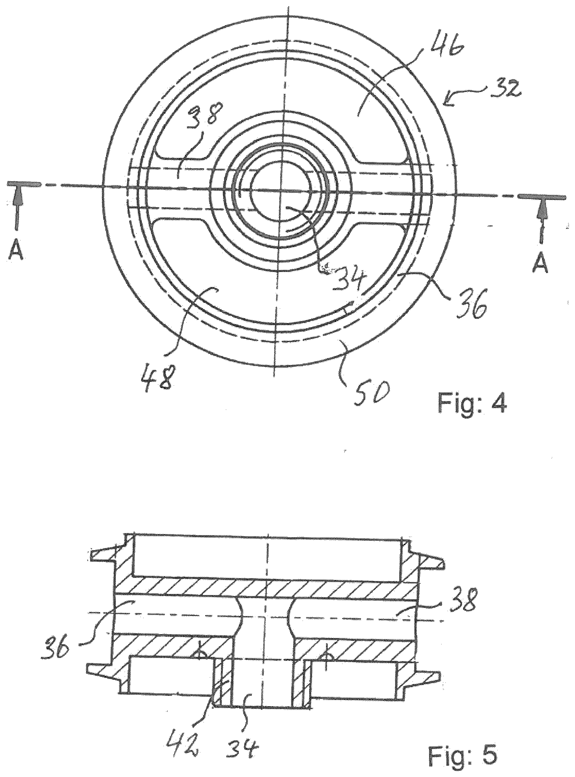

In Figur 4 ist eine Draufsicht auf die Halterung 32 mit dem Sockel 30 des Düsenkopfes 6 gezeigt. Die Verbindungskanäle 36,38 umfassen einen Ringskanal 36, mit dem die Einlassöffnung(en) verbunden ist/sind, und einen diagonal zu der Halterung 30 verlaufenden, geraden Verbindungskanal 38, wobei der Verbindungskanal 38 den Ringskanal 36 mit der Durchtrittsöffnung 34 verbindet. Die in Figur 1 im Schnitt gezeigten Verbindungskanäle 36,38 sind in Figur 4 durch gestrichelte Linien angedeutet. Aus Figur 4 ist ferner zu ersehen, dass die fließfähige Substanz durch Austrittsöffnungen 46,48 aus dem erfindungsgemäßen Kavitationsreaktor austreten kann.

In Figur 5 ist ein Schnitt durch einen Teil der Halterung 32 des Düsenkopfes 6 darstellt, welcher durch einen Außenring 50, der in den Figuren 1 und 4 gezeigt ist, zur kompletten Halterung 32 vervollständigt wird. Die behandelte die fließfähige Substanz verlässt den Kavitationsreaktor über die Austrittsöffnungen 46,48 und eine Haupt-Austrittsöffnung 52.

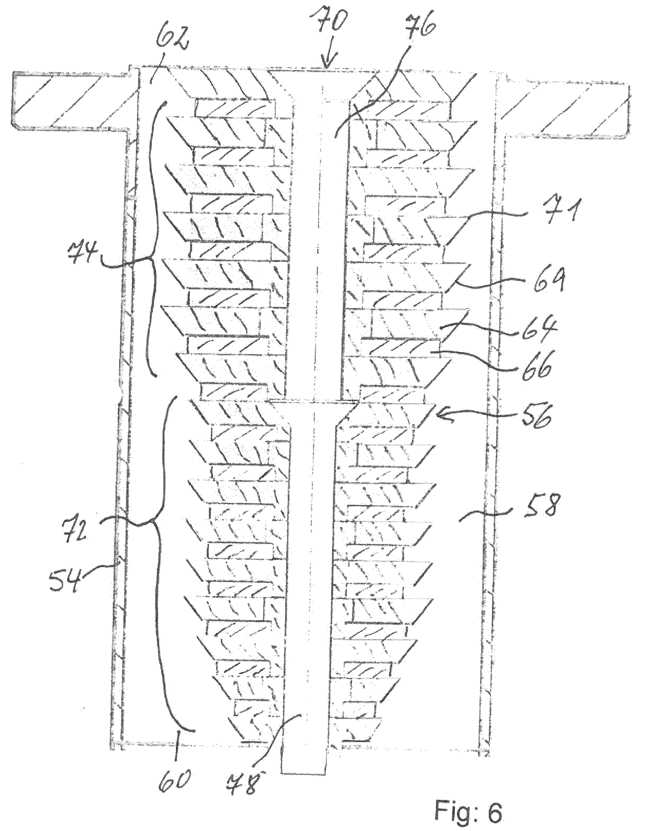

Figur 6 zeigt eine Schnittdarstellung eines zweiten Kavitationsreaktors II zum Behandeln von fließfähigen Substanzen mittels Kavitation. Der Kavitationsreaktor II hat ein rohrförmiges Gehäuse 54, in dem ein schwer umströmbarer Reaktormodul 56 unter Bildung eines Ringraumes 58 zwischen dem Reaktormodul 56 und dem Gehäuse 54 angeordnet ist. Der Kavitationsreaktor hat eine Eingangsöffnung 60 für die Zufuhr der zu vermischenden und/oder miteinander zur Reaktion zu bringenden Komponenten der Substanzen und eine Ausgangsöffnung 62 für die Abgabe des aus der behandelten Substanz bestehenden Massestroms.

Der Reaktormodul 56 umfasst mehrere schwer umströmbare Scheibenelemente 64, die jeweils mit dem Gehäuse 54 eine lokale Strömungseinengung bilden und von einander beabstandet sind, und Zwischenscheiben 66 zwischen den Scheibenelementen 64.

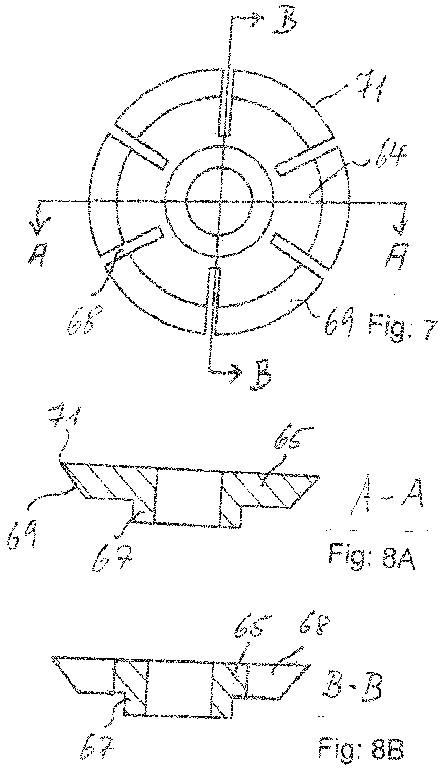

In Figur 7 ist ein Scheibenelement 64 in Draufsicht gezeigt, während Figur 8A einen Schnitt entlang der Schnittlinie A - A und Figur 8B einen Schnitt entlang der Schnittlinie B - B durch das Scheibenelement 64 nach Figur 7 zeigen. Das Scheibenelement 64 hat mehrere radial verlaufende durch das Scheibenelement 64 hindurch gehende Schlitze 68, wie in den Figuren 7 und 8B gezeigt ist. Die Scheibenelemente 64 haben jeweils eine Scheibe 65 und einen Sockel 67.

Das Scheibenelement 64 hat an seinem Umfang eine unter einem Winkel zu der Scheibe 65 stehende Umfangsfläche 69, die eine Spitze 71 bildet, die im Einbauzustand auf der stromab liegenden Seite des Scheibenelementes 64 zu liegen kommt.

Die Zwischenascheiben 66 haben keine Schlitze und überdecken die Schlitze 68 der Scheibenelemente 64 wenigstens teilweise. Die Scheibenelemente 64 und die Zwischenscheiben 66 sind an einem Bolzen 70 gestapelt und befestigt, mit dem sie über eine Halterung (nicht gezeigt) mit dem Gehäuse 54 zu verbinden sind.

Der Reaktormodul 56 nach Figur 6 hat zwei Teilbereiche 72, 74, wobei die Scheibenelemente 64 des stromauf liegenden, ersten Teilbereichs 72 weiter von dem Gehäuse 54 beabstandet sind als die Scheibenelemente 64 in dem stromab liegenden und daneben angeordneten, zweiten Teilbereich 74. In diesem Fall ist der Bolzen 70 zweigeteilt, wobei jeder Teilbereich 72, 74 einen Bolzenabschnitt 76, 78 hat und wobei die Bolzenabschnitte 76, 78 miteinander verbunden sind.

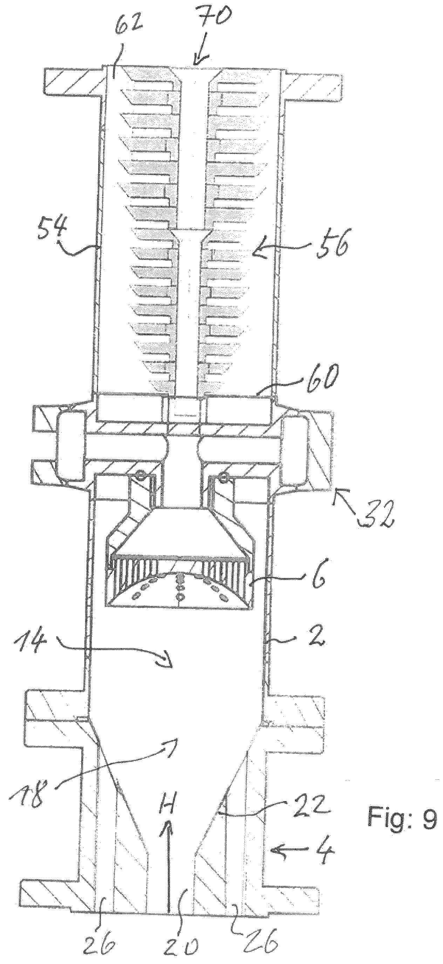

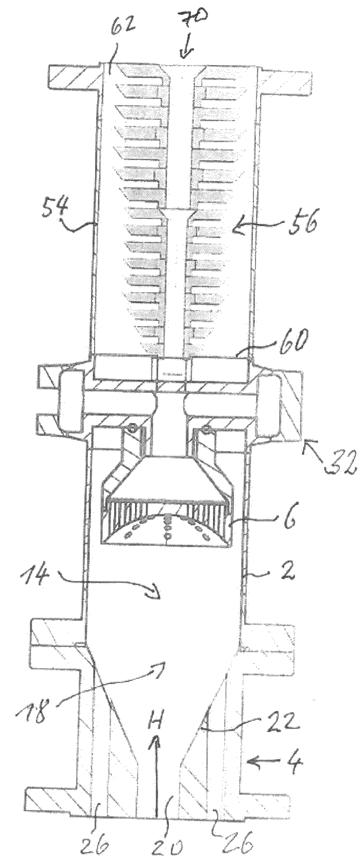

Figur 9 zeigt einen Schnitt durch die Kavitationsreaktoreinrichtung, die eine Kombination aus dem ersten und dem zweiten Kavitationsreaktor ist und zum Behandeln von fließfähigen Substanzen dient, wobei dem Kavitationsreaktor wenigstens zwei Komponenten zugeführt, gemischt und/oder zur Reaktion gebracht werden. Die Kavitationsreaktoreinrichtung umfasst einen ersten Kavitationsreaktor mit einem ersten, rohrförmigen Gehäuse 2, mit dem in Strömungsrichtung (H) stromab eine Zulaufeinrichtung 4 verbunden ist, die eine zugeführte Haupt-Komponente als mittig in dem Gehäuse 2 verlaufenden Strahl in Strömungsrichtung H abgibt, und in dem ein der Zulaufeinrichtung 4 mittig gegenüberliegender Düsenkopf 6 angeordnet sind, der mehrere Kanäle aufweist, deren Mündungen unter unterschiedlichen radialen Abständen zu einer Mittelachse des Düsenkopfes 6 liegen und durch die wenigstens eine Zugabe-Komponente entgegen der Strömungsrichtung H der Haupt-Komponente zuzuführen ist, wobei durch die Beabstandung der Zulaufeinrichtung 4 von dem Düsenkopf 6 ein Reaktionsraum 14 in dem Gehäuse 2 gebildet ist, und einen zweiten Kavitationsreaktor mit einem zweiten, rohrförmigen Gehäuse 52, in dem ein schwer umströmbaren Reaktormodul 56 unter Bildung eines Ringraumes 58 zwischen dem Reaktormodul 56 und dem Gehäuse 52 über eine Halterung angeordnet ist, wobei der Reaktormodul 56 mehrere schwer umströmbare Scheibenelemente 64, die jeweils eine lokale Strömungseinengung bilden und von einender beabstandet sind, und Zwischenscheiben 66 zwischen den Scheibenelementen 64 aufweist.

Bei dem erfindungsgemäßen Kavitationsreaktor werden mittels turbulenter Strömungen in dem Reaktionsraum hydrodynamische Kräftefelder aufgebaut, die zur Kavitation bzw. Superkavitation führen und die vielfältig genutzt werden können: Zum einen kann es zur physikalischen Vermischung von schwer mischbaren und/oder lösbaren Komponenten, z. B. hydrophoben und hydrophilen Gemischen wie Wasser/Öl, Milch/Fett, Kraftstoff/Wasser, herangezogen werden. Zum anderen kann die Kavitation eingesetzt werden, um chemische Reaktionen zwischen wenigstens zwei Komponenten einzuleiten oder wenigstens durch die innige Vermischung der Reaktionskomponenten erheblich zu beschleunigen. In Abhängigkeit von der Konzentration beigemengter bzw. gelöster Stoffe (z. B. Gase) können beispielsweise Radikale, reaktive Zwischenstoffe (wie z. B. Polyoxide) erzeugt werden, die als Katalysatoren sowie als Reaktionspartner sowohl Abbau, Aufbau oder Umbau molekularer Verbindungen benutzt werden können. Damit werden Reaktionen von unter Standardbedingungen inkompatiblen (z. B. nicht mischbaren) Komponenten ermöglicht. Allgemeine Beispiele solcher Reaktionen umfassen das Mischen, Emulgieren, Dispergieren, Homogenisieren, und Begasen in Systemen, die Komponenten in Form von fest-flüssig, flüssig-fest, flüssig-flüssig, gasförmig-flüssig, flüssig-gasförmig Phasen umfassen.

Ein Beispiel für eine Substanz, die stark mit Fremdstoffen belastet ist, ist Rohöl, das bekanntlich unerwünschte Bestandteile wie Teer, Wachs und Schwefel in größeren Mengen enthält. Beim Durchlauf des Rohöls durch die kombinierte Kavitationsreaktoreinrichtung werden die Bestandteile des Rohöls, zwischen denen keine Reaktion stattfindet, miteinander vermischt und homogenisiert, während die Komponenten, zwischen denen eine Reaktion stattfindet, beispielweise Schwefelverbindungen, die mit zugeführtem Ozon oder Wasserstoff-Peroxyd reagiert, in Substanzen umgesetzt werden, die danach aus dem Rohöl abgetrennte werden können.

## Patentansprüche

1. Kavitationsreaktoreinrichtung zum Behandeln von fließfähigen Substanzen, wobei dem Kavitationsreaktor wenigstens zwei Komponenten zugeführt, gemischt und/oder zur Reaktion gebracht werden, wobei der Kavitationsreaktoreinrichtung umfasst:
einen ersten Kavitationsreaktor mit einem ersten, rohrförmigen Gehäuse (2), mit dem in Strömungsrichtung (H) stromab eine Zulaufeinrichtung (4) verbunden ist, die eine zugeführte Haupt-Komponente als mittig in dem Gehäuse (2) verlaufenden Strahl in Strömungsrichtung (H) abgibt, und in dem ein der Zulaufeinrichtung (4) mittig gegenüberliegender Düsenkopf (6) angeordnet sind, der mehrere Kanäle aufweist, deren Mündungen unter unterschiedlichen radialen Abständen zu einer Mittelachse des Düsenkopfes (6) liegen und durch die wenigstens eine Zugabe-Komponente entgegen der Strömungsrichtung (H) der Haupt-Komponente zuzuführen ist, wobei durch die Beabstandung der Zulaufeinrichtung (4) von dem Düsenkopf (6) ein Reaktionsraum (14) in dem Gehäuse (2) gebildet ist, und
einen zweiten Kavitationsreaktor mit einem zweiten, rohrförmigen Gehäuse (52), in dem ein schwer umströmbarer Reaktormodul (56) unter Bildung eines Ringraumes (58) zwischen dem Reaktormodul (56) und dem Gehäuse (52) über eine Halterung angeordnet ist, wobei der Reaktormodul (56) mehrere schwer umströmbare Scheibenelemente (64), die jeweils eine lokale Strömungseinengung bilden und von einender beabstandet sind, und Zwischenscheiben (66) zwischen den Scheibenelementen (64) aufweist.

2. Kavitationsreaktorreinrichtung nach Anspruch 1, **dadurch gekennzeichnet, dass** die Zulaufeinrichtung (4) ein Zulaufgehäuse (16) mit einem mittigen Zulaufkanal (18) aufweist, der sich von einer eintrittsseitigen Zulauföffnung (24) aus mit einem in Strömungsrichtung (H) trichterförmig ausgebildeten Erweiterungsabschnitt (22) bis zu dem rohrförmigen Gehäuse (2) erstreckt.

3. Kavitationsreaktorreinrichtung nach Anspruch 1, **dadurch gekennzeichnet, dass** der Zulaufkanal (18) eintrittsseitig einen zylindrischen Kanalabschnitt (20) aufweist, an den sich in Strömungsrichtung (H) der Erweiterungsabschnitt (22) anschließt, wobei die Zulaufeinrichtung (4) eine mittig in das Gehäuse (2) gerichtete Strömung der Haupt-Komponente abgibt.

4. Kavitationsreaktorreinrichtung nach Anspruch 2 oder 3, **dadurch gekennzeichnet, dass** das Zulaufgehäuse (16) mehrere parallel zur Strömungsrichtung (H) verlaufende Hilfs-Zulaufkanäle (26) aufweist, die eintrittsseitig unter radialen Abständen zu dem mittigen Zulaufkanal (18) liegen und in dem konischen Erweiterungsabschnitt (22) enden.

5. Kavitationsreaktorreinrichtung nach Anspruch 1, **dadurch gekennzeichnet, dass** in der Mitte des Düsenkopfes (6) eine Prallfläche (28) ohne Kanäle für die von der Zulaufeinrichtung (4) abgegebenen Strömung vorgesehen ist.

6. Kavitationsreaktorreinrichtung nach Anspruch 5, **dadurch gekennzeichnet, dass** die Kanäle (8) des Düsenkopfes (6) außerhalb der Prallfläche (28) auf Kreisen mit unterschiedlichen Radien zu der Mittelachse des Düsenkopfes (6) angeordnet sind.

7. Kavitationsreaktorreinrichtung nach Anspruch 6, **dadurch gekennzeichnet, dass** die Mündungen der Kanäle (8) auf einer Einhüllendenfläche liegen, die sich von der Prallfläche sich in Richtung zu der Zulaufeinrichtung (4) hin erweiternd zu einem äußeren Rand des Düsenkopfes (6) erstreckt.

8. Kavitationsreaktorreinrichtung nach Anspruch 7, **dadurch gekennzeichnet, dass** die Einhüllendenfläche eine becherförmige, vorzugsweise konische Fläche ist.

9. Kavitationsreaktorreinrichtung einem der vorhergehenden Ansprüche, **dadurch gekennzeichnet, dass** der Düsenkopf (6) austauschbar ausgebildet ist.

10. Kavitationsreaktorreinrichtung einem der vorhergehenden Ansprüche, **dadurch gekennzeichnet, dass** der Düsenkopf (6) auf einer Halterung (32) gelagert ist, die eine mittige Durchtrittsöffnung (34) für die Einleitung der Zugabe-Komponente(n) in den Düsenkopf (6) aufweist, wobei die Durchtrittsöffnung (34) über Verbindungskanäle (36,38) mit jeweils einer Einlassöffnung (40) zur Zufuhr jeweils einer Zugabe-Komponente in die Verbindungskanäle (36,38) verbunden ist.

11. Kavitationsreaktorreinrichtung nach Anspruch 1, **dadurch gekennzeichnet, dass** die Scheibenelemente (64) jeweils mehrere radial verlaufende durch das jeweilige Scheibenelement (64) hindurch gehende Schlitze (68) aufweist, und dass die Zwischenascheiben (76) die Schlitze (88) der Scheibenelemente (64) wenigstens teilweise überdecken.

12. Kavitationsreaktorreinrichtung nach Anspruch 1 oder 11, **dadurch gekennzeichnet, dass** das Scheibenelement (64) eine Scheibe (65) umfasst, die an ihrem Umfang eine unter einem Winkel zu der Scheibe (65) stehende Umfangsfläche (69) hat, die eine Spitze (71) bildet, die im Einbauzustand auf der stromab liegenden Seite des Scheibenelementes (64) zu liegen kommt.

13. Kavitationsreaktorreinrichtung nach einem der Ansprüche 1, 11 oder 12, **dadurch gekennzeichnet, dass** die Scheibenelemente (64) und die Zwischenscheiben (66) an einem Bolzen (80) gestapelt und befestigt sind, der über die Halterung mit dem Gehäuse (62) verbunden ist.

14. Kavitationsreaktorreinrichtung nach Anspruch 1, **dadurch gekennzeichnet, dass** der Reaktormodul (56) zwei Teilbereiche (72,74) umfasst, wobei die Scheibenelemente (64) des stromauf liegenden Teilbereichs (72) weiter von dem Gehäuse (52) beabstandet sind als in dem stromab liegenden und daneben angeordneten Teilbereich (74).
